# EUROPEAN PATENT SPECIFICATION

(11) **EP 1 408 593 B1**
(45) Date of publication and mention of the grant of the patent: **01.07.2009**
(21) Application number: 03022481.0
(22) Date of filing: 08.10.2003
(51) Int. Cl.: H02G 3/30

(54) **Support structure for industrial ducting, anchorable to a ceiling**
Trägerstruktur für eine industrielle Leitung, an einer Decke verankerbar
Support pour canalisation industrielle, ancrable à un plafond

(30) Priority: 09.10.2002 IT TO20020872
(43) Date of publication of application: 14.04.2004
(73) Proprietor: Bticino S.p.A., 20154 Milano (IT)
(72) Inventor: Gallan, Claudio, 15040 Cascina Grossa (Alessandria) (IT); Marengo, Massimo, 15011 Acqui Terme (Alessandria) (IT)
(74) Representative: Deambrogi, Edgardo

(56) References cited:
- EP-A- 0 813 279
- EP-A- 0 813 280

## Description

The present invention relates to the field of industrial ducting and specifically a support structure anchorable to a ceiling, in particular for the suspension of coupling profile sections for support brackets of cable duct systems.

For the installation of cable duct systems in industrial ducting, where it is not possible to set the channels or the trays, or the respective support brackets, against the walls of the premises passed through, it is known to effect suspension from a ceiling by means of perforated anchorage plates to which are welded coupling profile sections which extend perpendicularly from the lower side of the plate and are capable of receiving such brackets or other support members.

The coupling profile section, generally of the so-called U or C type, having a base wall from which extends a pair of parallel, orthogonal lateral edges, is joined to the anchorage plate by welding at one end. The plate is then secured in a stable manner to the ceiling of the premises or to a similar load-bearing structure by means of plugs which engage in the apertures with which the plate is provided.

It is necessary for the end of the profile section to be a cross section at a right angle in order to avoid irregular assembly such as to form a residual inclination between the parts which may prejudice the stability of the cable duct system which is to be supported.

In order to strengthen the structure and increase its resistance to tension in the case of heavy loads, an angular reinforcing member may be added between the lower surface of the plate and the base wall of the profile section.

The structure conventionally adopted therefore uses simple components as its component parts, but it requires preassembly of such parts which becomes onerous, especially in terms of time, because of the introduction of further working steps.

A support structure for cable carrier ductings made in one-piece fashion out of metal plate bent to shape is disclosed in EP 0 813 280 A1. The metal plate is bent to form an anchoring portion for attachment to a load-bearing structure, having at least one bolt hole, a portion for supporting cable channels, which is orthogonal to the plane of the anchoring portion, and stiffening flanges connecting the support portion along the entire length of the anchoring portion sides.

The aim of the present invention is to provide a support structure anchorable to a ceiling, which is simple and the production of which is less onerous, thus avoiding the drawbacks of the prior art.

According to the present invention, this aim is achieved by means of a support structure, **characterised in that** it is produced by bending a single shaped sheet of plate and includes:
an anchorage plate for anchoring to a load-bearing structure;
a coupling profile section integral with the plate and comprising a base wall from which extends a pair of parallel lateral edges orthogonal to the base wall, the base wall being connected at a right angle to the plate at a fold line of the sheet; and
lateral reinforcing wings, orthogonal to the plane in which the plate lies and substantially coplanar with the edges of the profile section, and which are adapted to connect the plate and the profile section obliquely to each other, said wings extending integrally from one of said members and being fixed in a stable manner to the other in a bent installation configuration.

Particular embodiments of the invention are defined in the dependent claims.

Further characteristics and advantages will be explained in more detail in the following detailed description provided by way of non-limiting example with reference to the appended drawings, in which:
Figure 1 is a perspective view of a first embodiment of the support structure according to the invention;
Figure 2 is a view of the flat development of a shaped sheet of plate which, by means of bending, forms the structure of Figure 1;
Figure 3 is a perspective view of a variant of the support structure of Figure 1;
Figures 4a and 4b are views of the flat development of two respective shaped sheets of plate which, by means of bending, form the components of the structure of Figure 3;
Figures 5a, 5b, 5c are perspective views of a second embodiment of the support structure according to the invention; and
Figure 6 is a view of the flat development of a shaped sheet of plate which, by means of bending, forms the structure of Figures 5a, 5b, 5c.

A support structure for industrial ducting and produced by bending a single shaped sheet of plate (zinc-plated sheet metal, for example) is indicated as a whole by 10. It comprises an anchorage plate 12 provided with apertures 14 in order to be secured in a stable manner to a load-bearing structure of the site of installation of the ducting, for example by means of plugs. By the term load-bearing structure there will be indicated in the continuation of the present description the ceiling and the walls which bound premises in a building or a general site of installation or any structural metalwork element arranged in such a place, such as, for example, scaffolding, girders, longitudinal members, landings, or pillars.

To the plate 12 there is connected an integral U-shaped coupling profile section 16 which has a base wall 20 and lateral edges 22 perpendicular thereto. A back portion 24 for connection between the plate and the base wall, of generally trapezoidal shape, extends from the aforesaid plate by bending of the sheet of plate at a right angle, forming the corner edge 30.

On the plate 12 can be seen a main portion 32 widened with respect to the transverse dimensions of the base wall 20 of the profile section and an appendage portion 34 having limited transverse dimensions with respect to the main portion.

The edges 22 of the profile section are connected to the appendage portion 34 of the plate by means of a respective pair of integral reinforcing wings 40, disposed obliquely between the plane in which the plate lies and the general plane of the profile section, which wings, in their working arrangement, are orthogonal to the plane in which the plate lies and substantially coplanar with the edges of the profile section.

Advantageously, the profile section 16 is equipped with apertures 42 in the edges so as to be able to receive and hold the fixing means for fixing one or more superposed cable duct system support brackets or further extension lengths, and also with apertures 44 provided in the base wall for receiving auxiliary anchorage means for anchoring to a load-bearing structure, for example for placing the structure of the invention in a dihedron formed by a mounting member (wall, pillar) and a horizontal plane (ceiling, beams).

The coupling of support brackets or other supporting members may of course take place according to any one of the criteria widely known in the art (for example by bolting or by form-fitting coupling in a groove of the profile section, with the intervention of an anchor-headed bolt and return spring) which do not need to be described here, also because they are in themselves not relevant to the purposes of implementing and understanding the invention.

In all the figures which accompany this description, identical or functionally equivalent elements have been indicated with the same numerical references.

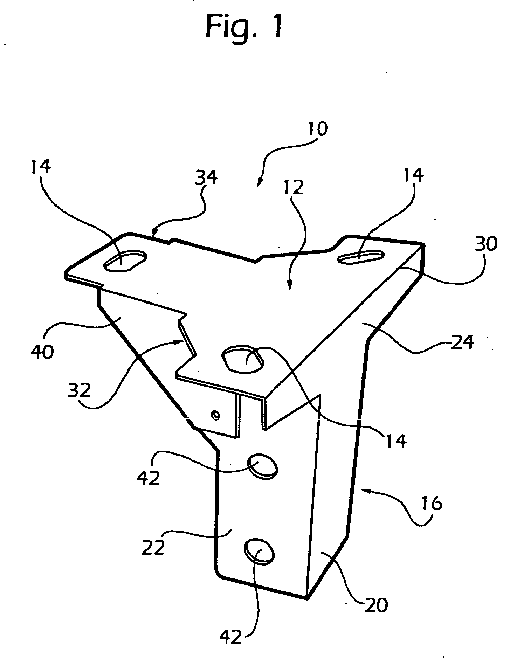

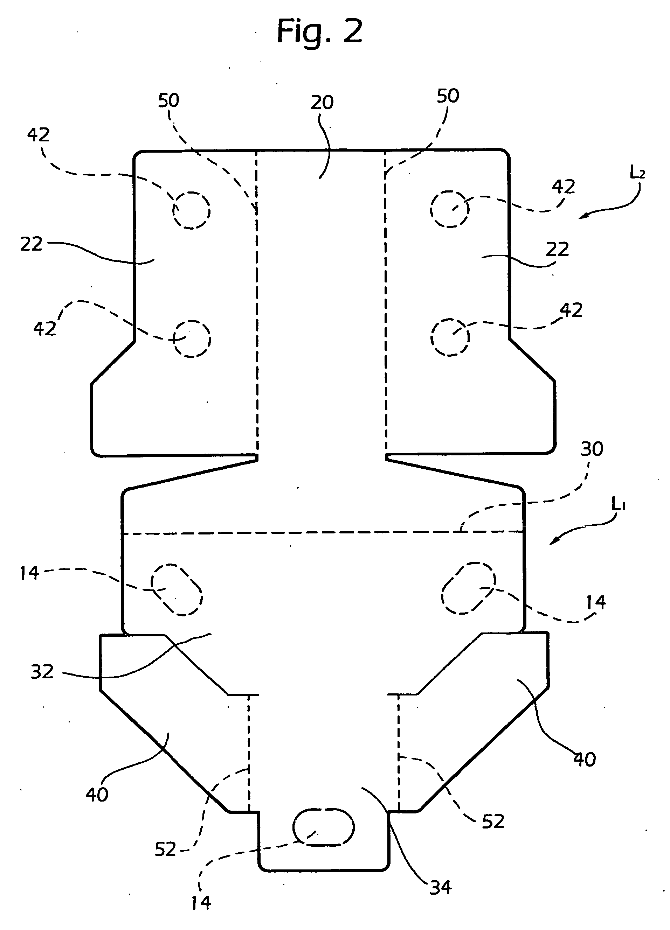

Referring now to Figures 1 and 2, a first embodiment of the support structure of the invention is illustrated.

Figure 2 shows the flat development of a shaped sheet of plate which, by means of bending, forms the structure of Figure 1. A first portion L₁ is identified, constituting the plate 12, and a portion L₂ constituting the profile section 16, which are separated by the fold line indicated by dashed lines 30. Two parallel fold lines of the portion L₂, which define the base wall 20 and the edges 22 of the profile section 16, are indicated by 50.

Two further parallel fold lines which separate the appendage portion 34 of the plate from the pair of reinforcing wings 40 are indicated by 52.

As shown in Figure 1, in the bent configuration the reinforcing wings 40 extending from the appendage portion of the plate are joined in a stable manner to the edges of the profile section 16 by spot welding or by punching or riveting.

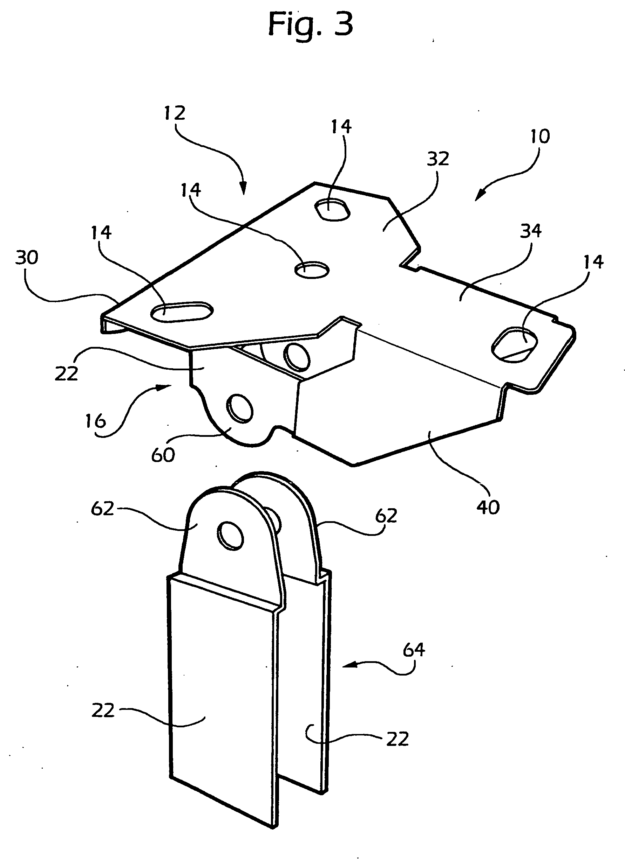

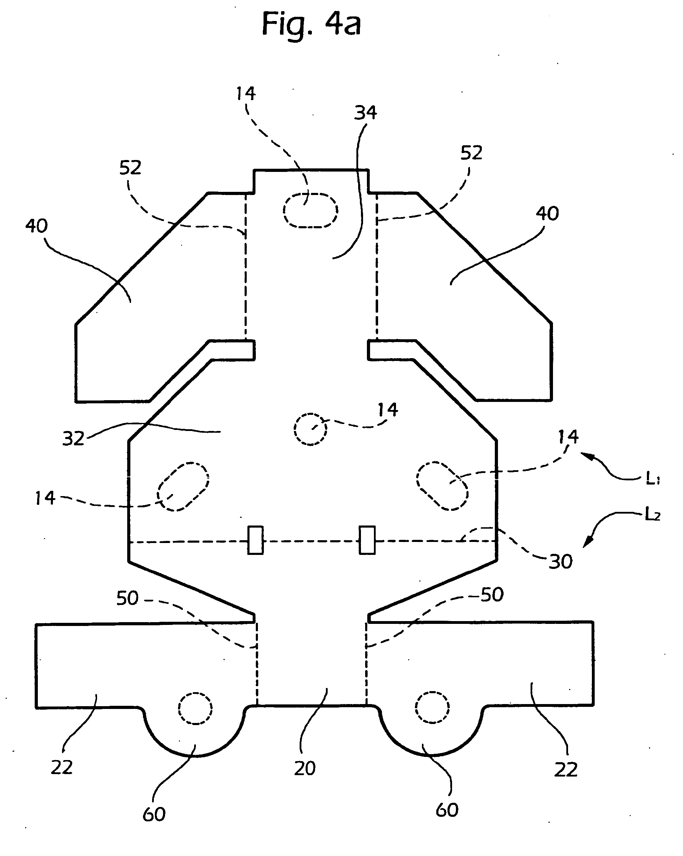

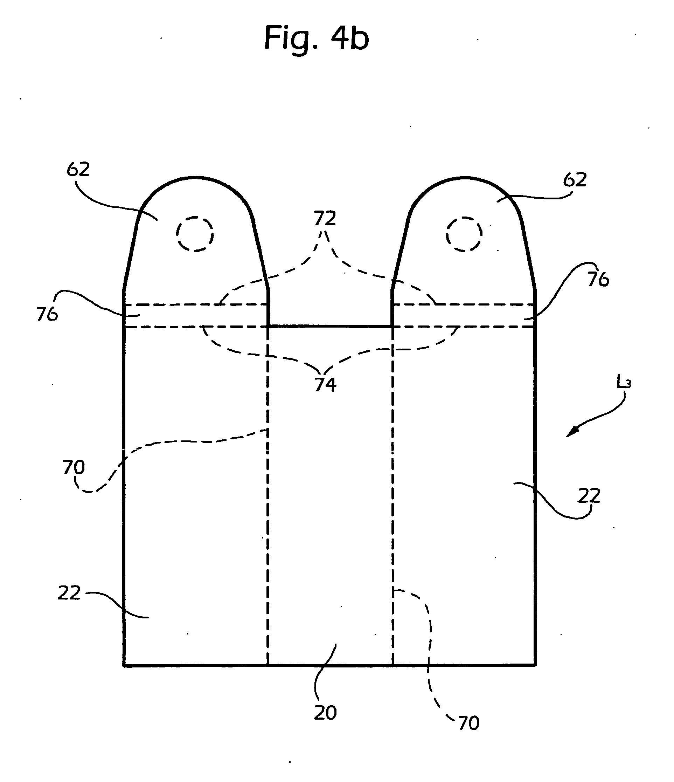

With reference to Figures 3, 4a and 4b, a variant of the embodiment described is illustrated, in which the structure portion constituting the coupling profile section 16 has, at the free longitudinal end of the lateral edges 22, on the opposite side from the anchorage plate, a pair of articulation appendages 60 which are capable of co-operating with a corresponding pair of appendages 62 formed at one end of an accessory coupling profile section 64, to allow the coupling and inclination of the accessory profile section at a variable angle with respect to the vertical axis of the profile section integral with the support member.

Figure 4a shows the flat development of a shaped sheet of plate which, by means of bending, forms the upper structure of Figure 3. Analogously to what has been described with reference to Figure 2, L₁ indicates the portion constituting the plate 12 and L₂ indicates the portion constituting the profile section 16, the portions being separated by the fold line indicated by dashed lines 30. The fold lines which define the base wall 20 and the edges 22 of the profile section 16 are indicated by 50, while the fold lines which separate the appendage portion 34 of the plate from the pair of reinforcing wings 40 are indicated by 52.

In the bent configuration of Figure 3, the reinforcing wings 40 extending from the appendage portion of the plate are joined in a stable manner to the edges of the profile section 16 by spot welding or by punching or riveting.

Figure 4b shows the flat development of a second shaped sheet of plate L₃ which, by means of bending, forms the accessory coupling profile section 64, reproduced in the lower part of Figure 3.

The fold lines which define the base wall 20 and the edges 22 of the profile section 64 are indicated by 70, while 72 and 74 indicate the fold lines which separate the pair of articulation appendages 62 from the body of the edges 22 constituting an intermediate band 76. In the assembly configuration, the intermediate band 76 is bent at a right angle with respect to the edges and the appendages, so as to allow the arrangement of said appendages in a plane offset with respect to the plane of the edges.

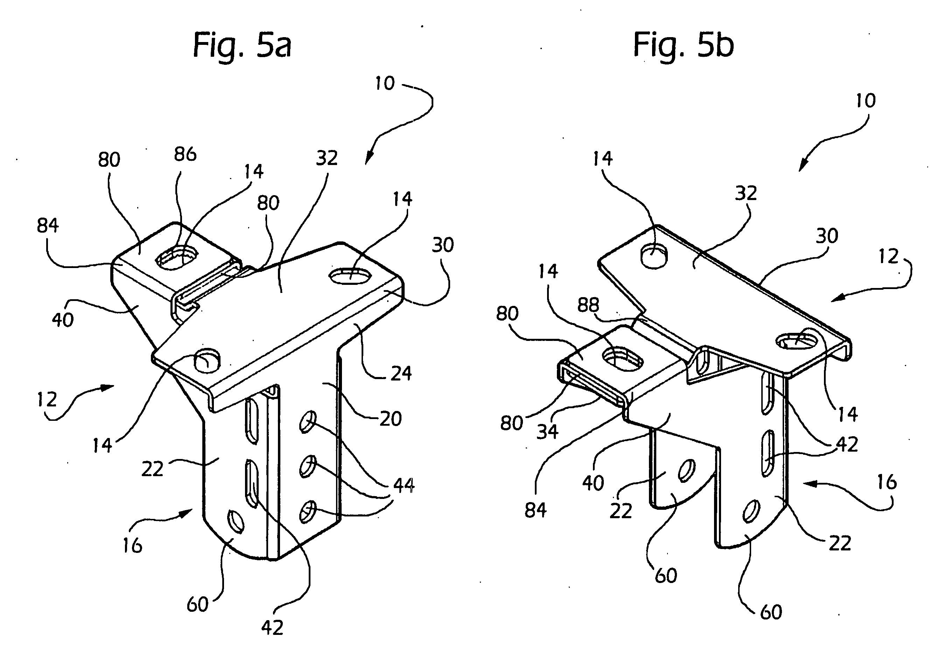

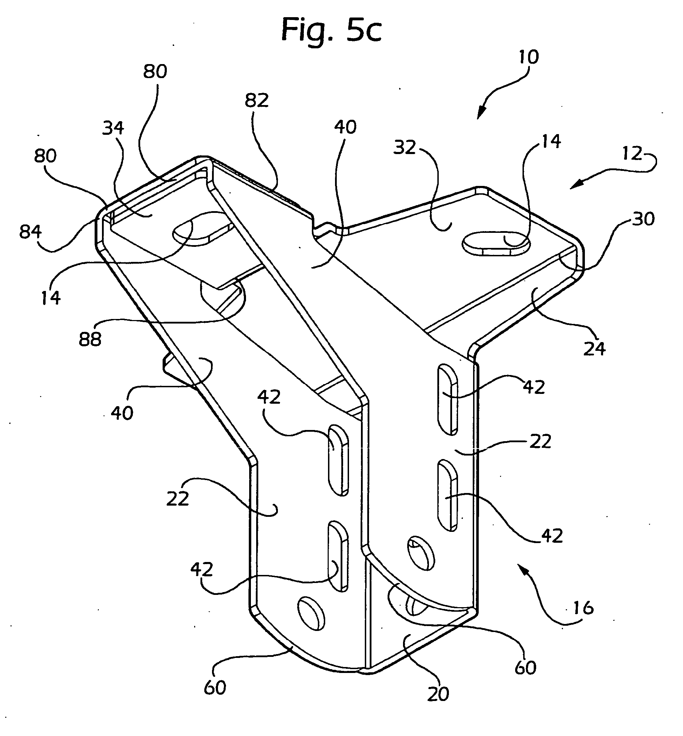

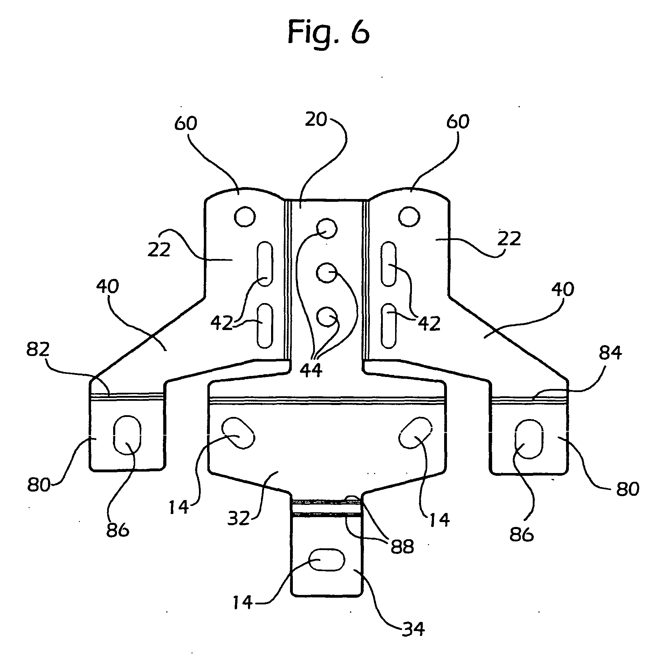

Referring now to Figures 5a-5c and 6, a second embodiment of the support structure of the invention is illustrated.

Figure 6 shows the flat development of a shaped sheet of plate which, by means of bending, forms the structure shown at various angles in Figures 5a-5c.

With respect to the embodiment described previously, the reinforcing wings 40 extend obliquely from the edges 22 of the coupling profile section 16 and each has an end portion 80 the longitudinal axis of which is still parallel to the longitudinal axis of the edges.

The wings have at the root of the relative end portion 80 a respective fold line 82, 84, and each portion is provided with an aperture 86 of a shape and size corresponding substantially to those of the aperture 14 provided on the appendage portion 34 of the plate. The longitudinal length of the portions 80 of the two wings is different and the two fold lines are not aligned, but extend in parallel directions.

Along the appendage portion 34 of the plate 12 a pair of fold lines 88 is defined.

As shown in the views of Figures 5a-5c, in the bent configuration each end portion 80 is bent at a right angle onto the appendage portion 34 of the plate. In more detail, the end portion of lesser length is bent directly onto the appendage portion 34 of the plate, and the end portion of greater length is superposed on the previous one.

The appendage portion 34 of the plate lies in a lower plane parallel to the plane of the main portion 32 so that, following the superposition of the bent ends 80 of the reinforcing wings, the free upper surface lies in alignment with the plane of the main portion and the apertures 86 are aligned with the aperture 14 of the appendage portion of the plate.

The anchorage of the support structure by means of plugs or similar fixing members passing through the apertures 14 of the plate makes it possible at the same time to secure the reinforcing wings to the appendage of the plate in a stable manner.

Advantageously, from the exemplary embodiments described above it will be understood that the support structure of the invention, being made of a single sheet of plate, is easy to produce while maintaining the robustness and simplicity of installation which distinguishes this component of the support systems for industrial ducting.

While the principle of the invention remains unchanged, the embodiments and details of production may of course be widely varied with respect to what has been described and illustrated purely by way of non-limiting example, without thereby departing from the scope of protection defined by the appended claims.

## Claims

1. A support structure (10) for industrial ducting, anchorable to a load-bearing structure, in particular for the suspension of coupling profile sections for support brackets of cable duct systems, produced by bending a single shaped sheet of plate and including:
an anchorage plate (12) for anchoring to a load-bearing structure;
a coupling profile section (16) integral with the plate (12) and comprising a base wall (20) from which extends a pair of parallel lateral edges (22) orthogonal to the base wall, said wall (20) being connected at right angles to the plate (12) at a fold line (30) of the sheet; and
lateral reinforcing wings (40) orthogonal to the plane in which the plate (12) lies and substantially coplanar with the edges (22) of the profile section (16), and adapted to connect the plate (12) and the profile section (16) obliquely to each other, said wings (40) extending integrally from one of said members (12; 16) and being fixed in a stable manner to the other (16; 12) in a bent installation configuration,
**characterised in that** said plate (12) has a main portion (32) widened with respect to the transverse dimensions of the base wall (20) of the profile section (16) and provided with apertures (14) capable of allowing the engagement of anchorage means for anchoring to the ceiling or a similar load-bearing structure, and an appendage portion (34) having limited transverse dimensions with respect to the main portion (32), for connecting with the edges of the profile section.

2. A support structure (10) according to claim 1, **characterised in that** said coupling profile section (16) has, on the opposite side from the connection with the plate (12), means (60) for the articulated connection of a second coupling profile section (64), which are arranged to receive said second profile section (64) and are adapted to allow the inclination thereof at a variable angle with respect to the integral profile section (16) of the support structure (10).

3. A support structure (10) according to claim 1 or 2, **characterised in that** said reinforcing wings (40) extend from the appendage (34) of the plate (12) at respective fold lines (52) of the sheet and are fixed in a stable manner to the edges (22) of the profile section (16).

4. A support structure (10) according to claim 3, wherein said reinforcing wings (40) are fixed to the lateral edges (22) of the profile section (16) by welding.

5. A support structure (10) according to claim 3, wherein said reinforcing wings (40) are fixed to the lateral edges (22) of the profile section (16) by punching or riveting.

6. A support structure (10) according to claim 1, **characterised in that** said reinforcing wings (40) extend obliquely from said edges (22) of the profile section (16) and have an end (80) bent orthogonally onto said appendage portion (34) of the plate (12).

7. A support structure (10) according to claim 6, wherein the end (80) of a first wing (40) is disposed bent onto said appendage portion (34) of the plate (12) and the end (80) of the second wing (40) is disposed bent onto the end (80) of the first wing (40).

8. A support structure (10) according to claim 6 or 7, **characterised in that** said appendage portion (34) of the plate (12) lies in a plane parallel to the plane of the main portion (32) of the plate (12) so that, in an installation configuration, the surface resulting from the superposition of the bent ends (80) of the reinforcing wings (40) on the appendage portion (34) is aligned with the plane of the main portion (32).

9. A support structure (10) according to claim 8, wherein the appendage portion (34) of the plate (12) comprises at least one aperture (14) capable of allowing the engagement of anchorage means for anchoring to the load-bearing structure.

10. A support structure (10) according to claim 9, **characterised in that** the ends (80) of the reinforcing wings (40) have apertures (86) located in such a way as to be arranged at said at least one aperture (14) of the appendage (34) of the plate (12) in their bent state.

11. A support structure (10) according to any one of the preceding claims, **characterised in that** it comprises a back portion (24) for connection between the main portion (32) of the plate (12) and the base wall (20) of the profile section (16), having a generally trapezoidal shape.

12. A support structure (10) according to any one of the preceding claims, wherein said coupling profile section (16) has apertures (44) on the base wall (20) for anchorage to a load-bearing structure or the engagement of coupling means for coupling a bracket or similar support structure of cable duct systems.

13. A support structure (10) according to any one of the preceding claims, wherein said coupling profile section (16) has apertures (42) on the lateral edges (22) for the engagement of coupling means for coupling a bracket or similar support structure of cable duct systems.

## Patentansprüche

1. Trägerstruktur (10) für eine industrielle Leitung, die an einer tragenden Struktur verankerbar ist, insbesondere zum Aufhängen von Kupplungsprofilabschnitten für Halterungsbügel von Kabelrohrsystemen, welche durch Biegen einer einzigen geformten Blechplatte hergestellt wird und Folgendes umfasst:
eine Verankerungsplatte (12) zum Verankern an einer tragenden Struktur;
einen Kupplungsprofilabschnitt (16), der in der Platte (12) integriert ist und eine Grundwand (20) umfasst, von der sich ein Paar paralleler Seitenkanten (22) erstreckt, die zur Grundwand orthogonal sind, wobei die Wand (20) an einer Faltlinie (30) des Blechs mit der Platte (12) im rechten Winkel verbunden ist; und
seitliche Verstärkungsflügel (40), die zu der Ebene, auf der die Platte (12) liegt, orthogonal und mit den Kanten (22) des Profilabschnitts (16) im Wesentlichen koplanar sind und dazu angepasst sind, die Platte (12) und den Profilabschnitt (16) schräg miteinander zu verbinden, wobei sich die Flügel (40) in einer gebogenen Montageanordnung von einem der Bauglieder (12; 16) integrierend erstrecken und stabil am anderen (16; 12) befestigt sind,
**dadurch gekennzeichnet, dass** die Platte (12) einen Hauptteil (32) aufweist, der in Bezug auf die Querabmessungen der Grundwand (20) des Profilabschnitts (16) erweitert ist und mit Öffnungen (14) versehen ist, die imstande sind, das Eingreifen von Verankerungsmitteln zum Verankern an der Decke oder einer ähnlichen tragenden Struktur zu ermöglichen, sowie einen Fortsatzteil (34), der begrenzte Querabmessungen in Bezug auf den Hauptteil (32) aufweist, und zwar zur Verbindung mit den Kanten des Profilabschnitts.

2. Trägerstruktur (10) gemäß Anspruch 1, **dadurch gekennzeichnet, dass** der Kupplungsprofilabschnitt (16) an der der Verbindung mit der Platte (12) gegenüberliegenden Seite Mittel (60) zur gelenkigen Verbindung eines zweiten Kupplungsprofilabschnitts (64) aufweist, welche zur Aufnahme des zweiten Profilabschnitts (64) angeordnet sind und dazu angepasst sind, dessen Neigung in Bezug auf den integrierten Profilabschnitt (16) der Trägerstruktur (10) in einem veränderlichen Winkel zuzulassen.

3. Trägerstruktur (10) gemäß Anspruch 1 oder 2, **dadurch gekennzeichnet, dass** sich die Verstärkungsflügel (40) an entsprechenden Faltlinien (52) des Blechs vom Fortsatz (34) der Platte (12) erstrecken und an den Kanten (22) des Profilabschnitts (16) stabil befestigt sind.

4. Trägerstruktur (10) gemäß Anspruch 3, wobei die Verstärkungsflügel (40) durch Schweißen an den Seitenkanten (22) des Profilabschnitts (16) befestigt sind.

5. Trägerstruktur (10) gemäß Anspruch 3, wobei die Verstärkungsflügel (40) durch Stanzen oder Vernieten an den Seitenkanten (22) des Profilabschnitts (16) befestigt sind.

6. Trägerstruktur (10) gemäß Anspruch 1, **dadurch gekennzeichnet, dass** die Verstärkungsflügel (40) sich von den Kanten (22) des Profilabschnitts (16) schräg erstrecken und ein Ende (80) haben, das orthogonal zum Fortsatzteil (34) der Platte (12) hin gebogen ist.

7. Trägerstruktur (10) gemäß Anspruch 6, wobei das Ende (80) eines ersten Flügels (40) zum Fortsatzteil (34) der Platte (12) hin gebogen angeordet ist und das Ende (80) des zweiten Flügels (40) zum Ende (80) des ersten Flügels (40) hin gebogen angeordet ist.

8. Trägerstruktur (10) gemäß Anspruch 6 oder 7, **dadurch gekennzeichnet, dass** der Fortsatzteil (34) der Platte (12) auf einer Ebene liegt, die zur Ebene des Hauptteils (32) der Platte (12) parallel ist, so dass in einer Montageanordnung die Oberfläche, die sich aus der Überlagerung der gebogenen Enden (80) der Verstärkungsflügel (40) am Fortsatzteil (34) ergibt, mit der Ebene des Hauptteils (32) fluchtend ist.

9. Trägerstruktur (10) gemäß Anspruch 8, wobei der Fortsatzteil (34) der Platte (12) mindestens eine Öffnung (14) aufweist, die imstande ist, das Eingreifen von Verankerungsmitteln zum Verankern an der tragenden Struktur zu ermöglichen.

10. Trägerstruktur (10) gemäß Anspruch 9, **dadurch gekennzeichnet, dass** die Enden (80) der Verstärkungsflügel (40) Öffnungen (86) haben, die solcherart gelegen sind, um in ihrem gebogenem Zustand an dieser mindestens einen Öffnung (14) des Fortsatzes (34) der Platte (12) angeordnet zu sein.

11. Trägerstruktur (10) gemäß einem der vorhergehenden Ansprüche, **dadurch gekennzeichnet, dass** sie einen hinteren Teil (24) zur Verbindung zwischen dem Hauptteil (32) der Platte (12) und der Grundwand (20) des Profilabschnitts (16) umfasst, welcher eine im Allgemeinen trapezförmige Gestalt aufweist.

12. Trägerstruktur (10) gemäß einem der vorhergehenden Ansprüche, wobei der Kupplungsprofilabschnitt (16) an der Grundwand (20) Öffnungen (44) zum Verankern an einer tragenden Struktur oder Eingreifen von Verbindungsmitteln zum Ankoppeln eines Bügels oder einer ähnlichen Trägerstruktur von Kabelrohrsystemen aufweist.

13. Trägerstruktur (10) gemäß einem der vorhergehenden Ansprüche, wobei der Kupplungsprofilabschnitt (16) an den Seitenkanten (22) Öffnungen (42) zum Eingreifen von Verbindungsmitteln zum Ankoppeln eines Bügels oder einer ähnlichen Trägerstruktur von Kabelrohrsystemen aufweist.

## Revendications

1. Structure de support (10) destinée à des gaines industrielles, pouvant être ancrée à une structure porteuse de charge, notamment pour la suspension de sections de profils de raccord destinées à des pattes de support de systèmes de gaines de câbles, produite en coudant une feuille unique mise en forme constituée d'une plaque et comprenant :
une plaque d'ancrage (12) permettant un ancrage à une structure porteuse de charge ;
une section de profil de raccord (16) faisant partie intégrante de la plaque (12) et comprenant une paroi de base (20) de laquelle part une paire de bords latéraux parallèles (22) perpendiculaires à la paroi de base, ladite paroi (20) étant raccordée à angle droit à la plaque (12) au niveau d'une ligne de pliage (30) de la feuille ; et
des ailes de renforcement latérales (40) perpendiculaires au plan dans lequel se situe la plaque (12) et de façon sensiblement coplanaire avec les bords (22) de la section de profil (16), et aptes à raccorder la plaque (12) à la section de profil (16) de manière oblique l'une par rapport à l'autre, lesdites ailes (40) se prolongeant de façon solidaire depuis l'un desdits éléments (12 ; 16) et étant fixées l'une à l'autre (16 ; 12) de manière stable selon une configuration d'installation coudée,
**caractérisée en ce que** ladite plaque (12) comporte une partie principale (32) élargie par rapport aux dimensions transversales de la paroi de base (20) de la section de profil (16) et munie d'ouvertures (14) permettant la mise en contact avec des moyens d'ancrage destinés à effectuer un ancrage au plafond ou à une structure porteuse de charge semblable, et une partie formant appendice (34) ayant des dimensions transversales limitées par rapport à la partie principale (32) destinée à être raccordée aux bords de la section de profil.

2. Structure de support (10) selon la revendication 1, **caractérisée en ce que** ladite section de profil de raccord (16) comporte, sur sa face opposée au raccordement à la plaque (12), des moyens (60) permettant un raccordement articulé d'une deuxième section de profil de raccord (64), qui sont conçus pour recevoir ladite deuxième section de profil (64) et qui sont aptes à en permettre l'inclinaison d'un angle variable par rapport à la section de profil solidaire (16) de la structure de support (10).

3. Structure de support (10) selon la revendication 1 ou 2, **caractérisée en ce que** lesdites ailes de renforcement (40) se prolongent depuis l'appendice (34) de la plaque (12) à l'emplacement de lignes de pliage respectives (52) de la feuille et sont fixées de manière stable aux bords (22) de la section de profil (16).

4. Structure de support (10) selon la revendication 3, dans laquelle lesdites ailes de renforcement (40) sont fixées par soudage aux bords latéraux (22) de la section de profil (16).

5. Structure de support (10) selon la revendication 3, dans laquelle lesdites ailes de renforcement (40) sont fixées par poinçonnage ou rivetage aux bords latéraux (22) de la section de profil (16).

6. Structure de support (10) selon la revendication 1, **caractérisée en ce que** lesdites ailes de renforcement (40) se prolongent de façon oblique depuis lesdits bords (22) de la section de profil (16) et ont une extrémité (80) coudée perpendiculairement à ladite partie formant appendice (34) de la plaque (12).

7. Structure de support (10) selon la revendication 6, dans laquelle l'extrémité (80) d'une première aile (40) est disposée de façon coudée sur ladite partie formant appendice (34) de la plaque (12) et dans laquelle l'extrémité (80) de la deuxième aile (40) est disposée de façon coudée sur l'extrémité (80) de la première aile (40).

8. Structure de support (10) selon la revendication 6 ou 7, dans **caractérisée en ce que** ladite partie formant appendice (34) de la plaque (12) se situe dans un plan parallèle au plan de la partie principale (32) de la plaque (12) afin que, dans une configuration d'installation, la surface résultant de la superposition des extrémités coudées (80) des ailes de renforcement (40) sur la partie formant appendice (34) soit alignée avec le plan de la partie principale (32).

9. Structure de support (10) selon la revendication 8, dans laquelle la partie formant appendice (34) de la plaque (12) comprend au moins une ouverture (14) permettant la mise en contact de moyens d'ancrage destinés à effectuer un ancrage à la structure porteuse de charge.

10. Structure de support (10) selon la revendication 9, **caractérisée en ce que** les extrémités (80) des ailes de renforcement (40) comportent des ouvertures (86) placées de façon qu'elles soient agencées au niveau de ladite au moins une ouverture (14) de l'appendice (34) de la plaque (12) dans leur état coudé.

11. Structure de support (10) selon l'une quelconque des revendications précédentes, **caractérisée en ce qu'**elle comprend une partie arrière (24) permettant un raccordement entre la partie principale (32) de la plaque (12) et la paroi de base (20) de la section de profil (16), ayant une forme globalement trapézoïdale.

12. Structure de support (10) selon l'une quelconque des revendications précédentes, dans laquelle ladite section de profil de raccord (16) comporte des ouvertures (44) sur la paroi de base (20) destinées à effectuer un ancrage à une structure porteuse de charge ou à effectuer la mise en contact de moyens de raccordement permettant un raccordement d'un support ou d'une structure de support semblable de systèmes de gaines de câbles.

13. Structure de support (10) selon l'une quelconque des revendications précédentes, dans laquelle ladite section de profil de raccord (16) comporte des ouvertures (42) sur les bords latéraux (22) destinés à effectuer la mise en contact de moyens de raccordement permettant le raccordement d'un support ou d'une structure de support semblable de systèmes de gaines de câbles.
